Europäisches Patentamt

European Patent Office

Office européen des brevets

(19)

(11) Publication number: **0 307 130**
**A2**

## (12) EUROPEAN PATENT APPLICATION

(21) Application number: **88308052.5**

(22) Date of filing: **31.08.88**

(51) Int. Cl.⁴ **G11B 7/08 , G11B 7/09**

(30) Priority: **10.09.87 JP 225325/87**

(43) Date of publication of application:
**15.03.89 Bulletin 89/11**

(84) Designated Contracting States:
**DE FR GB**

(71) Applicant: **CANON KABUSHIKI KAISHA**
**30-2, 3-chome, Shimomaruko**
**Ohta-ku Tokyo(JP)**

(72) Inventor: **Hisatoshi, Baba**
**397, Futatsubashi-cho Seya-ku**
**Yokohama-shi Kanagawa-ken(JP)**

(74) Representative: **Beresford, Keith Denis Lewis**
**et al**
**BERESFORD & Co. 2-5 Warwick Court High**
**Holborn**
**London WC1R 5DJ(GB)**

(54) Position control method for movable member and apparatus therefor.

㊗ A position control method for a movable member, comprises steps of, generating sinusoidal position signals (A PHASE, B PHASE) of mutually different phases corresponding to the position of the movable member, generating sinusoidal command position signals (COS DATA, SIN DATA) of mutually different phases corresponding to the command position of the movable member, processing (at 104 to 106) the position signals and the command position signals, and moving the movable member (by motor 108) to the command position according to a signal obtained by the processing is disclosed.

FIG. 2

## Position Control Method for Movable Member and Apparatus Therefor

### BACKGROUND OF THE INVENTION

#### Field of the Invention

The present invention relates to position control of a movable member, and more particularly to a position control method insensitive to external vibration and capable of smoothly moving the movable member and an apparatus therefor.

#### Related Background Art

For information recording in or information regeneration from an optical disk having concentric or spiral information tracks, it it necessary to irradiate the information track of the rotating optical disk with a light beam from a record/reproducing head.

For this purpose the head constantly detects the reflected light of said light beam and conducts tracking control by moving an objective lens in such a manner that the light beam precisely follows the information track.

Also for access to arbitrary information recorded on the optical disk, there is provided a seek mechanism for moving said head in the radial direction of the optical disk. For reducing the seek time, there has recently been empolyed a linear motor for directly moving the head.

The seek control for the head is achieved, for example, by an external scale such as a linear photoelectric encoder.

Also in the tracking control state after a seeking operation, the head position is controlled in such a manner that the head always remains in an appropriate position with respect to the objective lens which follows the information track. Said control is achieved, for example, by fixing the head by means of an external scale such as a photoelectric linear encoder and stepwise moving the head according to a tracking error signal or a detection signal indicating the relative position of the objective lens and the head.

However, in the above-mentioned control method, the head moves stepwise according to the pitch of the external scale, for example, in case of following a spiral track with the light beam. Therefore, if the control gain is increased in consideration of the external perturbation such as external vibration, the above-mentioned stepwise movement becomes a significant perturbation to the tracking control, thus eventually giving rise to detracking.

On the other hand, if the pitch of the external scale is made smaller in order to reduce said perturbation, there cannot be obtained an enough dynamic range of control for the external vibrations.

### SUMMARY OF THE INVENTION

The object of the present invention is to provide a position control method for a movable member, and an apparatus therefor, capable of smoothly moving the movable member such as an optical head, and insensitive to external vibrations.

The above-mentioned object can be achieved, according to the present invention, by a position control method for a movable member, which is featured by using, as the control signal for the movable member, a calculated signal obtained from sinusoidal position signals of different phases corresponding to the position of the movable member and sinusoidal instructed position signals of different phases corresponding to the instructed position of the movable member.

Also said object can be achieved, according to the present invention, by a control apparatus for a movable member, which comprises:

a movable member;

moving means for moving said movable member;

position detection means for detecting the position of said movable member and releasing sinusoidal position signals of different phases corresponding to the position of said movable member;

position instruction means for said movable member, for releasing instructed position signals of different phases corresponding to the instructed position of said movable member;

operation means for releasing an operation signal by processing said position signals and said instructed position signals; and

control means for controlling the function of said moving means, utilizing thus released operation signal as the control signal.

### BRIEF DESCRIPTION OF THE DRAWINGS

Figs. 1A, B and C are views showing the principle of position control of the movable member according to the present invention;

Fig. 2 is a schematic block diagram of a position control apparatus for a movable member embodying the present invention;

Fig. 3 is a schematic view of an optical disk apparatus;

Fig. 4 is an enlarged perspective view of a linear encoder;

Fig. 5 is a schematic view of a linear encoder;

Fig. 6 is a schematic view of a sub scale;

Fig. 7 is a schematic view of slits of the sub scale;

Fig. 8 is a schematic view of slits of the main scale;

Fig. 9 is a wave form chart showing the signals of phases A and B of the linear encoder;

Fig. 10 is a schematic view of a head; and

Fig. 11 is a wave form chart showing the signals generated from two-phase sinusoidal wave generator.

## DETAILED DESCRIPTION OF THE PREFERRED EMBODIMENTS

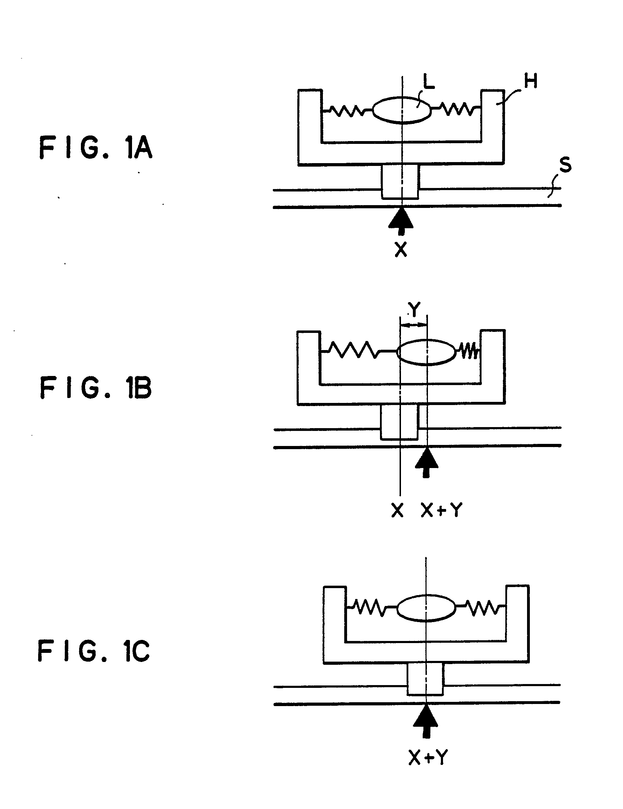

At first the principle of position control of a movable member of the present invention will be explained with reference to Figs. 1A, B and C, showing an example of optical disk apparatus, wherein shown are a lens L, a head H and an external scale S.

Fig. 1A shows a state in which the head H is at a position X depending on the pitch of the external scale S, and the lens L is positioned at the center of the head H.

Fig. 1B shows a state in which the lens L has moved for example by tracking control and is no longer at the center of the head H, thus creating a relative positional displacement y between the head H and the lens L. It is assumed that said displacement y is smaller than the pitch of the external scale S and cannot be compensated by the external scale S only.

Fig. 1C shows a state in which the head H has been moved to a position x+y by the moving means so that the lens L is positioned at the center of the head H. A control signal of the moving means for moving the head H is obtained by processing a position signal from the external scale S and a signal representing the displacement y.

In the following there will be explained said control signal, which is obtained by synthesizing sinusoidal waves. When a linear encoder releasing two signals with a phase difference of $90°$:

ENC-A = $\sin\theta$

ENC-B = $\cos\theta$

is used as the external scale, there can be obtained a sinusoidal wave of an arbitrary phase $\theta + \Delta$ according to an equation:

$$\alpha\cdot\sin\theta + \beta\cdot\cos\theta = \sqrt{\alpha^2 + \beta^2}\cdot\sin(\theta + \Delta) \setminus (1)$$

$$\Delta = \tan^{-1}\alpha/\beta$$

by suitably selecting constants $\alpha$ and $\beta$.

By substitutions:

$$\alpha = \cos\gamma$$

$$\beta = \sin\gamma$$

the equation (1) can be transformed as:

$$\cos\gamma\cdot\sin\theta + \sin\gamma\cdot\cos\theta = \sin(\theta + \gamma)$$

Since the right-hand term is $\sin(\theta + \gamma)$, it will be clear that $\gamma$ is equal to $\Delta$.

Thus the control signal can be obtained by multiplying the phase A and the phase B of the output signals of the linear encoder respectively by $\cos\Delta$ and $\sin\Delta$ of a desired phase $\Delta$ and adding the obtained reuslts.

Stated differently, a sinusoidal control signal of an arbitrary phase, not depending on the pitch of the linear encoder, can be obtained by processing sinusoidal signals obtained from the linear encoder and sinusoidal signals obtained from other means.

In the following there will be explained an embodiment of the present invention, while making reference to the attached drawings.

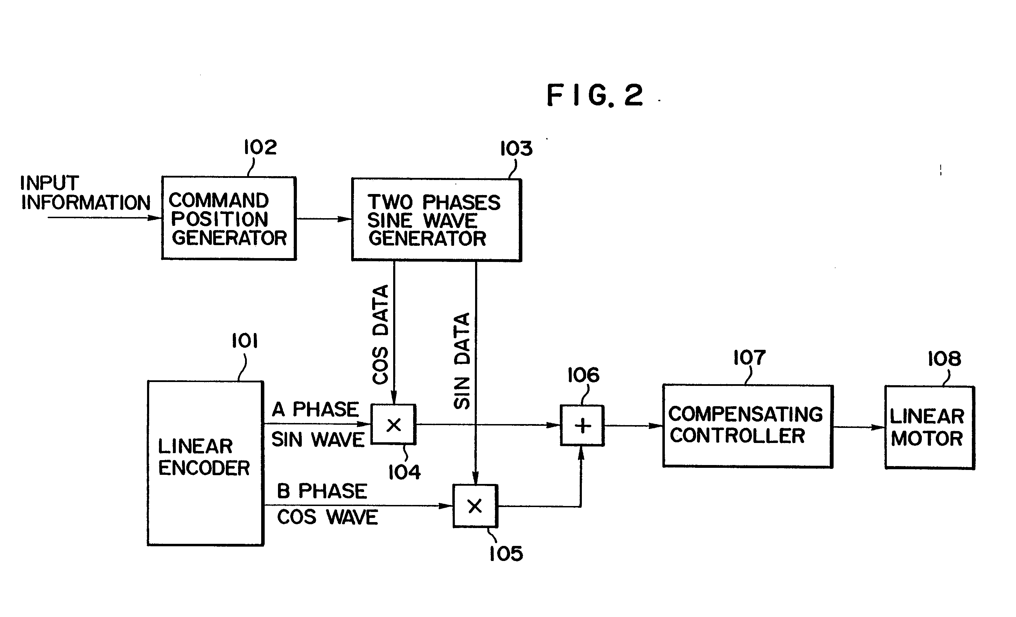

Fig. 2 is a schematic block diagram of an embodiment of the position control apparatus for a movable member according to the present invention.

In Fig. 2 the movable member itself is not shown, but a linear encoder 101 is attached to said movable member, and a linear motor 108 is provided for moving said movable member.

The linear encoder 101 releases, as the output signals of phase A and phase B, sinusoidal signals of a phase difference of $90°$ (sine wave and cosine wave) in relation to the slit positions of the encoder as will be explained later.

A command position generator 102 generates a command position for the movable member, in response to input information representing the relative position of the movable member with respect to another object. Thus the released command position represents a relative position.

A two-phase sinusoidal wave generator 103 generates sinusoidal signals of a phase difference of $90°$, cosine data and sine data, not related to the slits of the encoder, in response to the entered command position.

A multiplier 104 multiplies the sine wave of the phase A by the cosine data, while a multiplier 105 multiplies the cosine wave of the phase B by the sine data, and an adder 106 adds the obtained results.

The result obtained from the adder 106 is supplied, as a control signal, to a compensating controller 107 containing a phase compensation circuit and a driving circuit, whereby the linear motor 108 is controlled to move the movable member.

In the following there will be explained an optical information record/reproducing apparatus in which the above-explained embodiment is applied for head position control.

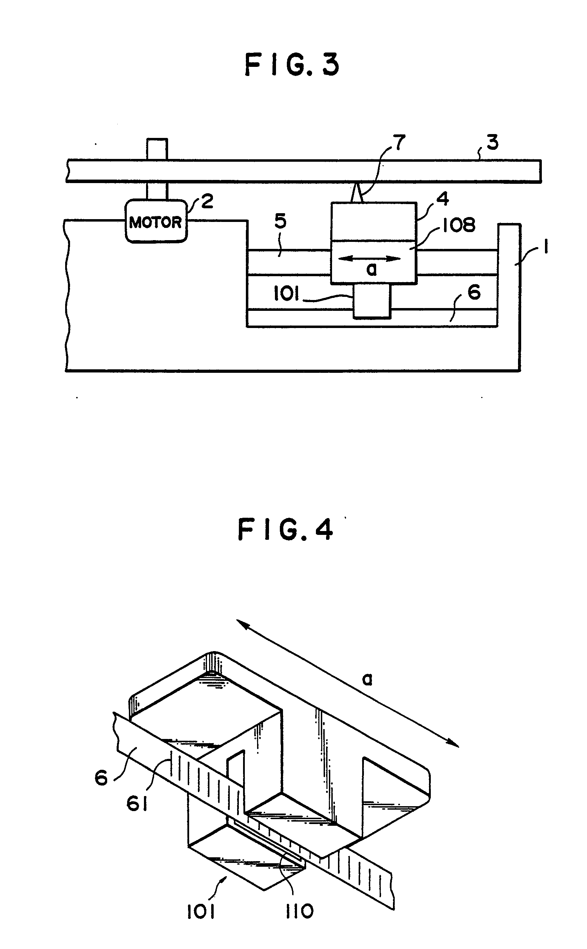

Fig. 3 is a schematic view of an optical disk apparatus.

An optical disk 3 serving as the information carrier is rotated at predetermined speed by a spindle motor 2 fixed on a base 1.

A head 4 for information recording and reproducing is rendered movable in a direction a along a rail 5 provided in the radial direction of the optical disk 3. The head 4 is moved in said direction a by the linear motor 108.

The head 4 is provided with a linear encoder 101 sandwiching a main scale 6 provided on the base 1.

The head 4 irradiates the information track of the optical disk 3 with a light beam, and reproduces the information and executes tracking and focusing control by the reflected light.

In the following there will be given a more detailed explanation on the linear encoder 101.

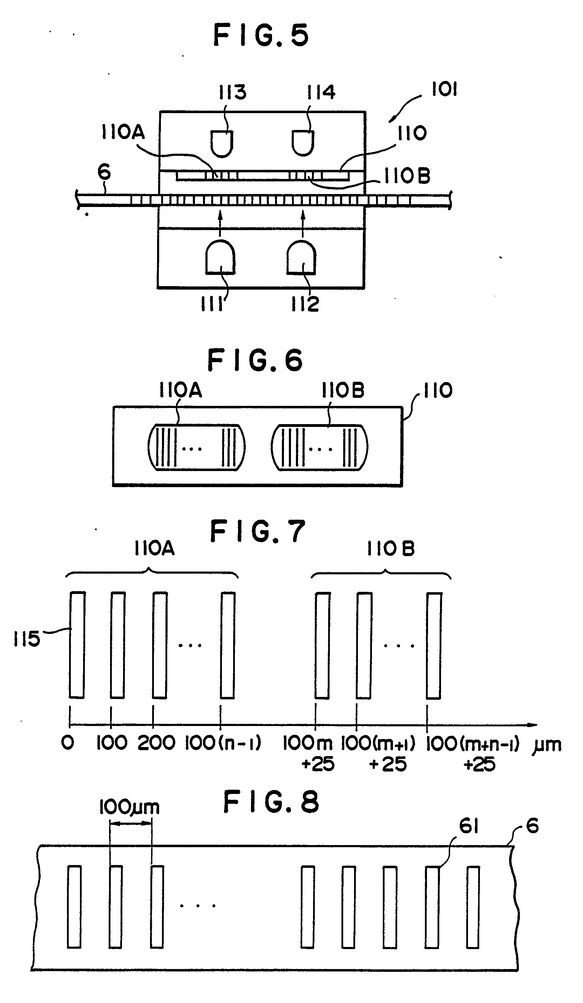

Fig. 4 is an enlarged perspective view of said linear encoder 101, and Fig. 5 is a schematic view thereof.

In these drawings, the main scale 6 is sandwiched in a groove of the linear encoder 101, and a sub scale 110 is provided in said groove in opposed relation to the main scale 6.

The main scale 6 has slits 61 at a constant pitch, and the sub scale 110 has two kinds of slits as will be explained later.

Light-emitting diodes 111, 112 serving at the light source are provided on a side of the groove of the linear encoder 101, while phototransistors 113, 114 are provided on the other side for receiving the light from said light sources.

Fig. 6 schematically illustrates the sub scale 110, while Fig. 7 illustrates the slits thereof, and Fig. 8 illustrates the slits of the main scale 6.

As shown in Fig. 6, the sub scale 110 is provided with slits 110A corresponding to the phase A and slits 110B corresponding to the phase B.

As shown in Fig. 7, the slits 110A and 110B have a mutual phase difference of $90^\circ$. In case of slit pitch of 100 $\mu$m, the slits 110B are displaced by 25 $\mu$m from the phase of the slits 110A. In Fig. 7, n and m are positive integers with a relationship $n \leq m$.

The main scale 6 is provided, as shown in Fig. 8, with slits 61 with a pitch of 100 $\mu$m.

When the linear encoder 101 having the above-explained sub scale 110 moves with respect to the main scale 6, the light from the light-emitting diode 111 is transmitted by the slits 61 and the slits 110A while the light from the light-emitting diode 112 is transmitted through the slits 61 and the slits 111B, and said lights are respectively received by the phototransistors 113, 114.

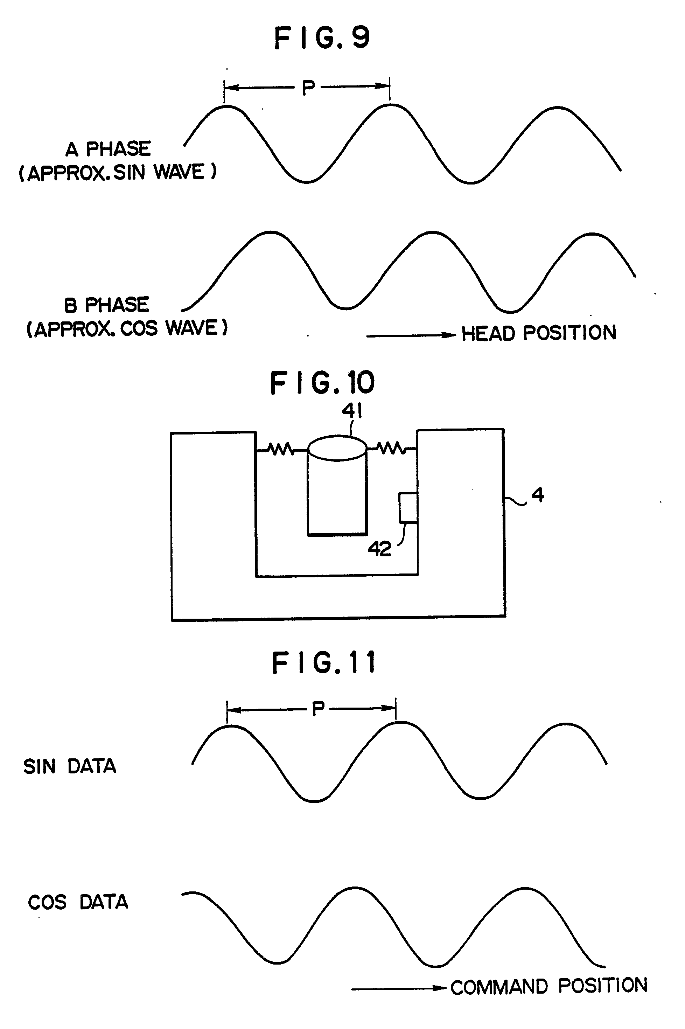

Thus the phototransistors 113, 114 respectively release, as shown in Fig. 9, substantially sinusoidal signals of a phase difference of $90^\circ$ (sine wave and cosine wave) as the phase A and the phase B, corresponding to the slit positions of the encoder.

Fig. 9 is a wave form chart of the signals released from the phases A and B of the linear encoder 101, wherein the abscissa indicates the position of the head 4.

In the following there will be explained the command position generator 102 and the two-phase sinusoidal wave generator 103.

The input information supplied to the command position generator 102 indicates the relative position between the head 4 and the objective lens driven by tracking control, as will be further explained with reference to Fig. 10.

Fig. 10 schematically shows the structure of the head 4, wherein an objective lens 41 for focusing a light beam 7 onto the optical disk 3 is provided movably in the tracking direction and in the focusing direction, and a lens position sensor 42 is provided as means for detecting the relative position of the objective lens 41 and the head 4.

For example in case of following a spiral information track as explained before, the objective lens 41 vibrates with the rotating frequency of the disk 3 due to the eccentricity thereof, and gradually moves in the radial direction of the disk 3. Thus the lens position sensor 42 releases a relative position signal composed of a substantially sinusoidal wave of a frequency equal to the rotating frequency, superposed with a DC component, and said position signal is used as the input information to the command position generator 102. Thus said input information represents an absolute relative position, by a substantially sinusoidal wave of a frequency equal to the rotating frequency, superposed with a DC component.

The command position generator 102 determines the average relative position of the objective lens 41 and the head 4 by eliminating the sinusoidal component caused by the eccentricity of the disk from the entired absolute relative position signal, and releases a corresponding command position signal. More specifically, when the objective lens 41 is deviated with respect to the head 4, the command position signal is released so as to move the head 4 to a desired position, thereby reducing said deviation.

In response to the command position signal, the two-phase sinusoidal wave generator 103 releases two sinusoidal waves of a phase difference of $90^\circ$ (sine data and cosine data) which are generated in response to the command position signals and have a pitch P equal to that of the signals of the phases A and B released from the linear encoder 101 as shown in Fig. 11, in which the abscissa indicates the command position.

As explained before, the linear encoder 101 generates a sine wave and a cosine wave corresponding to the actual head position, in relation to the slit positions of the encoder, and the two-phase sinusoidal wave generator 103 generates cosine data and sine data corresponding to the command positon.

For the purpose of simplicity, the position of the head 4 is represented by x, while the command position generated from the relative position of the objective lens 41 and the head 4 is taken as y.

Thus the phases A and B of the linear encoder 101 become equal to sin x and cos x, while the cosine data and the sine data of the two-phase sinusoidal wave generator 103 become respectively equal to cos y and sin y.

Thus multipliers 104, 105 and adder 106 provides the compensating controller 107 with a control signal represented by the following equation:

$$\sin x \cdot \cos y + \cos x \cdot \sin y = \sin (x + y)$$

The compensating controller 107 controls the linear motor 108 in such a manner as to bring the value of the control signal $\sin(x + y)$ to zero, so that the zero-crossing point of $\sin(x + y)$ can be placed at a desired position by suitably selecting the command position y. Thus the head 4 can be fixed at an arbitrary command position independently from the pitch of the slits of the main scale 6 and the sub scale 110.

Consequently the head 4 can be smoothly moved independently from the pitch of the silits and can move to a position not depending on said slit pitch, so that detracking caused by external perturbation in the conventional stepwise movement can be prevented. Besides the control system explained above is resistant to external vibrations because of a wide dynamic range of the slit pitch. Consequently the head does not vibrate by the eccentricity of the disk, and it is rendered possible to prevent unnecessary power consumption.

For example let us consider a case in which the command position of the head 4 is determined by the command position generator 102, and the relative position with the head 4 is aberrated due to movement of the base 1 by an external vibration. In such case the output of the linear encoder 101 varies to modify the control signal generated from the adder 106, whereby the compensating controller 107 so controls the linear motor 108 to return the head 4 to the command position. There is obtained a control system resistant to the external vibrations, since the control signal can be obtained in a desired form by multiplication and addition.

On the other hand, if the relative position of the objective lens 41 and the head 4 varies by the tracking control, the output of the lens position sensor 42 varies to modify the output of the two-phase sinusoidal wave generator 103, whereby the control signal from the adder 106 changes. Since this change is independent from the pitch of the slits, the compensating controller 107 can smoothly move the head 4 by driving the linear motor 108 so as to return the objective lens 41 to the command position.

The input information to the command position generator 102 is not limited to the output of the lens position sensor 42, but can be composed, for example, of the increase or decrease in the track number read from the optical disk 3.

More specifically, if there is a difference between the track position corresponding to the current position of the objective lens and that corresponding to the current position of the head, the displacement in the relative position of the objective lens and the head can be calculated from said difference and utilized as the input information.

In the foregoing embodiment a linear motor is empolyed as the moving means for the head, but there may be employed other head moving means such as a rotary motor combined with gears. Also in the foregoing embodiment a photoelectric linear encoder is employed for generating sinusoidal waves, but there may be employed any means capable of generating sinusoidal waves of mutually different phases, such as a magnetic scale.

As detailedly explained in the foregoing, the position control method and apparatus for a movable member of the present invention effects position control of the movable member by utilizing a control signal obtained by processing position signals and command position signals, thereby enabling selection of an arbitrary command position independent from the period of said position signals and thus achieving smooth movement of the movable member.

Besides, if the movable member moves by an external perturbation such as external vibration, the processed control signal is modified by a change in said position signals, whereby a control is made to return said movable member to the command position. Furthermore there can be obtained a control system resistant to external vibrations, since a desired control signal can be obtained by the means of said processing.

## Claims

1. A position control method for a movable member, comprising steps of:
generating sinusoidal position signals of mutually different phases corresponding to the position of said movable member;
generating sinusoidal command position signals of mutually different phases corresponding to the command position of said movable member;

processing said position signals and said command position signals; and

moving said movable member to the command position according to a signal obtained by said processing.

2. A position control apparatus for a movable member, comprising:

moving means for moving said movable member;

position detection means for detecting the position of said movable member and generating sinusoidal position signals of mutually different phases in response to the position of the movable member;

position command means for said movable memeber, for generating sinusoidal command position signals of mutually different phases in response to the command position of the movable member;

process means for processing said position signals and said command position signals and releasing a thus obtained process signal; and

control means for controlling the function of said moving means, utilizing thus generated process signal as a control signal.

3. A position control apparatus for a movable member, comprising:

a first movable member;

a second movable member movably supporting said first movable member;

first moving means for moving said first movable member;

displacement detecting means for detecting the relative displacement of said first and second movable members;

a support member movably supporting said second movable member;

second moving means for moving said second movable member;

position detecting means for detecting the relative position of said second movable member and said support member, said position detecting means being composed of a photoelectric encoder; and

control means for processing signals from said displacement detecting means and from said position detecting means, and controlling the function of said second moving means, utilizing a signal obtained by said processing as a control signal.

4. A system for controlling position of an object, comprising:

means (102, 103) to receive a first signal representing position;

means responsive to the first signal to produce second and third signals (COS DATA, SIN DATA) in quadrature;

means (101) responsive to the position of the object to produce fourth and fifth signals (A PHASE, B PHASE) in quadrature;

means (104-106) for processing the second to fifth signals to produce a sixth signal (104 output) from the second and fourth signals, to produce a seventh signal (105 output) from the third and fifth signals, and to produce an eighth signal (106 output) from the sixth and seventh signals; and

means (107, 108) responsive to the eighth signal to move the object.

F I G. 1A

F I G. 1B

F I G. 1C

# FIG. 2

EP 0 307 130 A2

# FIG. 3

# FIG. 4

## F I G. 5

## F I G. 6

## F I G. 7

## F I G. 8

0    100  200  100(n-1)    100m   100(m+1)   100(m+n-1)   μm
                           +25     +25        +25

100μm

## F I G. 9

A PHASE
(APPROX. SIN WAVE )

B PHASE
(APPROX. COS WAVE )

$\longrightarrow$ HEAD POSITION

## F I G. 10

## F I G. 11

SIN DATA

COS DATA

$\longrightarrow$ COMMAND POSITION